# EUROPEAN PATENT APPLICATION

(11) **EP 4 624 997 A1**
(43) Date of publication of application: **01.10.2025**
(21) Application number: 24823015.3
(22) Date of filing: 06.02.2024
(51) Int. Cl.: G01S 19/11

(54) **POSITIONING SYSTEM, VEHICLE DRIVE TESTING DEVICE, AND MOVING BODY**

(30) Priority: 16.06.2023 JP 2023099267
(71) Applicant: Mitsubishi Heavy Industries, Ltd., Tokyo 100-8332 (JP)
(72) Inventor: KONDO, Kazuumi, Tokyo 100-8332 (JP); TSUZUKI, Masahito, Tokyo 100-8332 (JP); SHIMIZU, Hirokazu, Kobe-shi, Hyogo 652-8585 (JP)
(74) Representative: Studio Torta S.p.A.
(86) International application number: PCT/JP2024/003888
(87) International publication number: WO 2024/257392

(57) **Abstract**

A positioning system (100) according to the present disclosure comprises: first communication devices (10) disposed inside a building (60); a second communication device (20) that is mounted in a moving body [vehicle] (50) which moves inside and outside the building (60) and that can communicate with the first communication devices (10); and a pseudo signal generating device (30) that acquires communication results between the first communication devices (10) and the second communication device (20), and generates, on the basis of the acquired communication results, a pseudo satellite signal that includes the same type of information as a satellite signal transmitted from the satellite (80). According to the present disclosure, highly accurate positioning employing satellite signals can be performed inside and outside a building.

## Description

### Technical Field

The present disclosure relates to a positioning system, a vehicle drive testing device, and a moving body.

### Background Art

In a case where positioning of a moving body is performed outside a building, for example, it is possible to perform absolute positioning using a satellite signal from a GNSS satellite or a GPS satellite. In addition, in a case where the moving body is positioned inside the building, the satellite signal is attenuated inside the building. Therefore, for example, it is possible to perform relative positioning using a relative positioning signal such as a beacon signal (for example, refer to PTLs 1 and 2).

### Citation List

### Patent Literature

[PTL 1] Japanese Patent No. 4461235
[PTL 2] Japanese Patent No. 7257166

### Summary of Invention

### Technical Problem

For example, in a case of performing autonomous driving of a moving body such as a vehicle, positioning using a satellite signal is required in order to detect a position of the moving body. It is required to accurately detect the position of the moving body using the satellite signal even in an environment where the satellite signal is attenuated and therefore cannot be received with sufficient intensity, such as inside a building.

The present disclosure has been made in view of the above, and an object of the present disclosure is to provide a positioning system, a vehicle drive testing device, and a moving body capable of performing highly accurate positioning using a satellite signal inside and outside a building.

### Solution to Problem

A positioning system according to the present disclosure includes a first communication device that is disposed inside a building; a second communication device that is mounted in a moving body moving inside and outside the building and that is capable of communicating with the first communication device; and a pseudo signal generating device that acquires a communication result between the first communication device and the second communication device, and generates, based on the acquired communication result, a pseudo satellite signal including the same type of information as that in a satellite signal transmitted from a satellite.

A vehicle drive testing device according to the present disclosure includes a movement path along which a test vehicle that is a moving body moves; a condition reproduction mechanism that reproduces a test condition of the test vehicle; a building that covers at least a part of the movement path and the condition reproduction mechanism; and the positioning system described above, in which the positioning system is mounted in the moving body and calculates a position of the moving body moving inside the building based on the generated pseudo satellite signal.

A moving body according to the present disclosure, which has a main body and a driving device and being movable along a movement path continuous inside and outside a building, the moving body includes: a second communication device capable of communicating with a first communication device disposed inside the building; a pseudo signal generating device that acquires a communication result between the first communication device and the second communication device, and generates, based on the acquired communication result, a pseudo satellite signal including the same type of information as that in a satellite signal transmitted from a satellite; a position calculation device that calculates a position of the moving body moving along the movement path inside the building based on the generated pseudo satellite signal; and a control device that controls an operation of the driving device based on the position calculated by the position calculation device.

### Advantageous Effects of Invention

According to the present disclosure, highly accurate positioning using a satellite signal can be performed inside and outside a building.

### Brief Description of Drawings

Fig. 1 is a diagram schematically showing an example of a positioning system according to the present embodiment.
Fig. 2 is a functional block diagram showing an example of the positioning system according to the present embodiment.
Fig. 3 is a diagram showing an example of a configuration inside a building.
Fig. 4 is a diagram showing an example of operation of the positioning system.
Fig. 5 is a diagram showing an example of operation of the positioning system.
Fig. 6 is a diagram showing another example of the operation of the positioning system.

### Description of Embodiments

Hereinafter, embodiments of a positioning system according to the present disclosure will be described with reference to the drawings. The present invention is not limited by the embodiments. In addition, components in the embodiments described below include those that can be easily replaced by those skilled in the art, or those that are substantially the same.

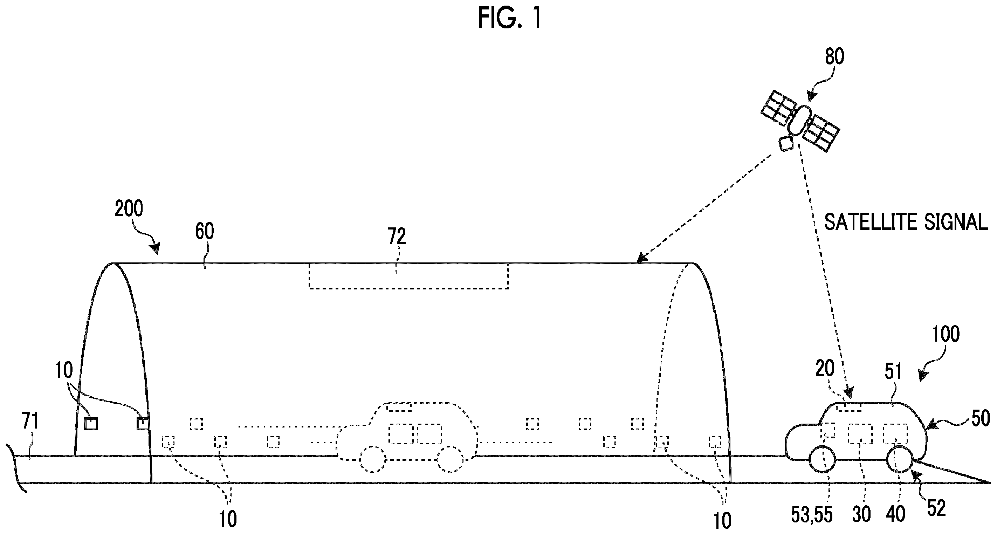

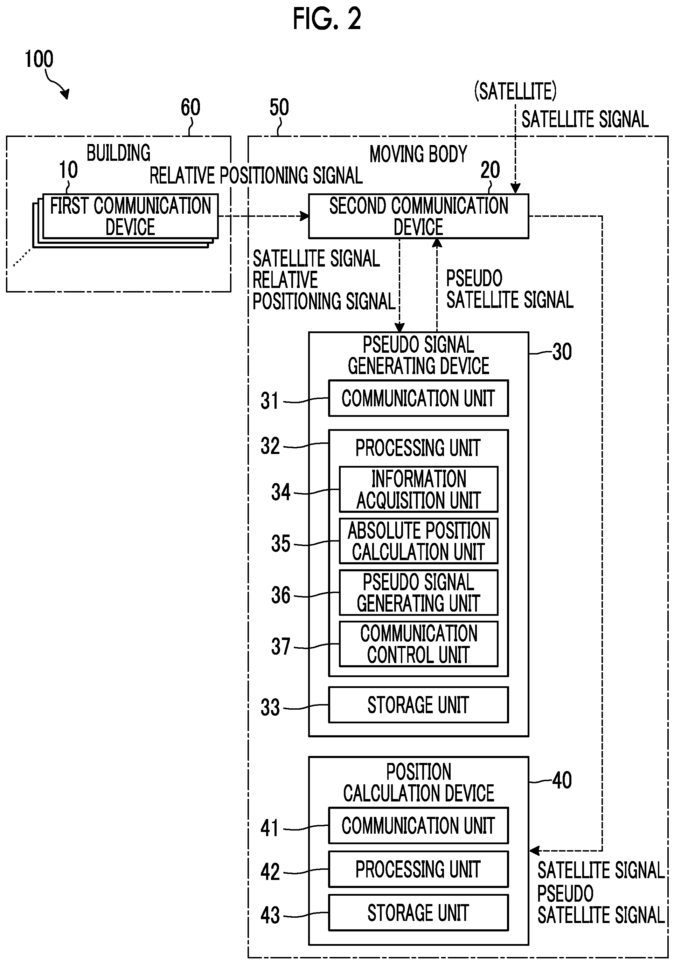

Fig. 1 is a diagram schematically showing an example of a positioning system 100 according to the present embodiment. Fig. 2 is a functional block diagram showing an example of the positioning system 100 according to the present embodiment.

As shown in Figs. 1 and 2, the positioning system 100 can perform positioning using a satellite signal transmitted from a satellite 80. Examples of the satellite 80 include a GNSS satellite and a GPS satellite. Examples of the satellite signal include a GNSS signal and a GPS signal.

The positioning system 100 includes a first communication device 10, a second communication device 20, a pseudo signal generating device 30, and a position calculation device 40. The positioning system 100 measures the position of the moving body 50 moving inside and outside a building 60. In the present embodiment, the moving body 50 is, for example, a vehicle such as an automobile, and includes a car body 51, a driving device 52, a communication unit 53, and a control device 55. The driving device 52 includes various devices, sensors, and the like used for driving the moving body 50, such as a traveling device for traveling the moving body 50 and an operation device for operating the traveling device. The communication unit 53 transmits and receives information to and from the positioning system 100. The communication unit 53 is capable of receiving information regarding the position of the moving body 50 located by the positioning system 100. The control device 55 controls the operation of the driving device 52. The control device 55 can control the operation of the driving device 52 based on the position of the moving body 50 received by the communication unit 53.

In the present embodiment, a case where the positioning system 100 is used in the vehicle drive testing device 200 will be described as an example. The vehicle drive testing device 200 reproduces a surrounding environment and a driving state of a test vehicle that is the moving body 50 to acquire vehicle operation information of the test vehicle. The vehicle drive testing device 200 performs a traveling test of the moving body 50 inside the building 60. The vehicle drive testing device 200 makes the moving body 50 travel inside the building 60, processes information acquired from the moving body 50 and information around the moving body 50, and calculates a test condition and a test result. The vehicle drive testing device 200 includes the movement path 71 along which the moving body 50 moves, the condition reproduction mechanism 72 that reproduces the test conditions of the moving body, and the building 60 that covers at least a part of the movement path 71 and the condition reproduction mechanism 72. The condition reproduction mechanism 72 adjusts the environment in the building 60 to set the environment around the moving body 50 to the environment under the test condition. The condition reproduction mechanism 72 includes various types of equipment such as a precipitation facility that reproduces rain, a snowfall facility that reproduces snow, a sunlight simulator that reproduces an environment during daytime, a temperature, humidity, and pressure adjustment facility that adjusts temperature and humidity, a fog generation facility that generates fog, an air blowing facility that generates wind, a dust generation facility that generates dust, a hail facility that reproduces hail, an electromagnetic noise generation facility that generates electromagnetic noise, and an electromagnetic noise reduction facility that reduces electromagnetic noise.

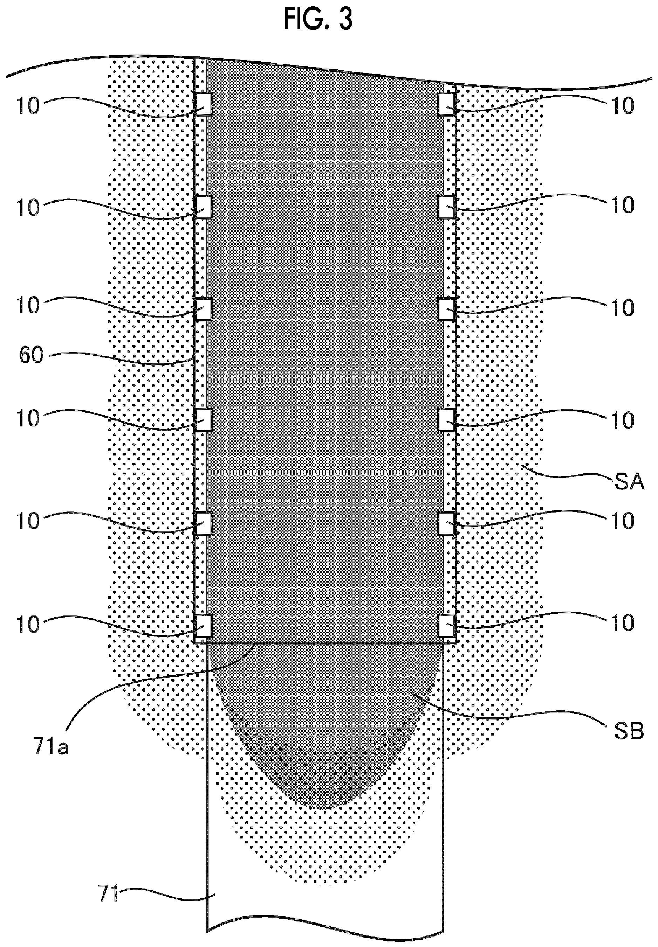

The first communication device 10 is disposed inside the building 60. Fig. 3 is a diagram showing an example of a configuration of an inside of the building 60. As shown in Fig. 3, a plurality of first communication devices 10 are disposed inside the building 60 at predetermined intervals along the movement path 71. The plurality of first communication devices 10 are disposed on both sides of the movement path 71 in the width direction at positions facing each other in the width direction. In addition, inside the building 60, the pair of first communication devices 10 is disposed at a position corresponding to the end portion 71a of the movement path 71 to face each other in the width direction. In a case where the movement path 71 crosses the building 60, the pair of first communication devices 10 can be disposed at the end portion on the side opposite to the end portion 71a to face each other in the width direction. In the building 60, the movement path 71 may have a bent or curved configuration. In some of the plurality of first communication devices 10, the communication range SA with the second communication device 20 is configured such that protrude from the inside to the outside of the building 60. In the present embodiment, a case where each first communication device 10 is a transmission device that transmits a relative positioning signal including device identification information will be described as an example. In this case, each first communication device 10 transmits the relative positioning signal at a predetermined cycle. The first communication device 10 is disposed such that a transmission range (communication range) SA of the relative positioning signal from the first communication device 10 overlaps with a transmission range (communication range) SA of the relative positioning signal from the second communication device 20. In addition, the first communication device 10 is disposed such that a part of the overlapping transmission range SB, in which the transmission ranges SA of the relative positioning signals of the plurality of first communication devices 10 overlap each other, protrudes outside the building 60. Examples of the relative positioning signal include a signal using ultra wide band (UWB), a beacon signal, and a motion capture signal. In a case where triangulation is performed using, for example, a beacon signal as a relative positioning signal, at least two first communication devices 10 are used. In addition, in a case where positioning is performed without using the beacon signal by using a motion capture signal or the like from a camera installed in the building 60, the number of the first communication devices 10 for transmitting the motion capture signal or the like from the camera may be one or more.

The second communication device 20 is capable of communicating with the outside including the first communication device 10. The second communication device 20 is mounted in the moving body 50. In the present embodiment, a case where the second communication device 20 is a reception device that receives the relative positioning signal transmitted from the first communication device 10 will be described as an example. In a case where the second communication device 20 receives the relative positioning signal, the second communication device 20 transmits the received relative positioning signal to the pseudo signal generating device 30. In addition, in a case where the second communication device 20 receives the satellite signal transmitted from the satellite 80, the second communication device 20 transmits the received satellite signal to the pseudo signal generating device 30. The second communication device 20 need not always receive the satellite signal from the satellite 80. For example, a satellite signal reception device capable of receiving a satellite signal from the satellite 80 may be separately provided, and a configuration may be adopted in which the satellite signal reception device is capable of transmitting the satellite signal to the pseudo signal generating device 30. In addition, the second communication device 20 is capable of receiving a pseudo satellite signal, which will be described later. The second communication device 20 transmits the received satellite signal or pseudo satellite signal to the position calculation device 40.

The pseudo signal generating device 30 performs various types of information processing for generating a pseudo satellite signal. The pseudo signal generating device 30 includes a communication unit 31, a processing unit 32, and a storage unit 33. The communication unit 31 performs wired or wireless communication with an external device. The communication unit 31 includes an interface such as a network interface card.

The processing unit 32 includes a processor such as a central processing unit (CPU), and a memory such as a read only memory (ROM) or a random access memory (RAM).

The processing unit 32 includes an information acquisition unit 34, an absolute position calculation unit 35, a pseudo signal generating unit 36, and a communication control unit 37.

The information acquisition unit 34 acquires various types of information. The information acquisition unit 34 acquires a communication result between the first communication device 10 and the second communication device 20. In addition, the information acquisition unit 34 receives the satellite signal from the second communication device 20. In a case where a satellite signal reception device capable of receiving a satellite signal is separately provided, the information acquisition unit 34 can receive the satellite signal from the satellite signal reception device. In the present embodiment, in a case where the relative positioning signal transmitted from the first communication device 10 is received by the second communication device 20, the information acquisition unit 34 acquires information included in the relative positioning signal received by the second communication device 20. The information acquisition unit 34 acquires time information indicating a time and satellite position information indicating a position of the satellite. The information acquisition unit 34 can acquire time information and satellite position information from a network such as the Internet via the communication unit 31, for example.

The absolute position calculation unit 35 calculates absolute position information indicating the absolute position of the moving body 50, based on the communication result between the first communication device 10 and the second communication device 20. Here, the absolute position can be a position of the moving body 50 on the earth. As the absolute position information, for example, coordinates using latitude, longitude, and altitude can be given. In the present embodiment, for example, the absolute position calculation unit 35 can calculate the position of the second communication device 20 by the second communication device 20 receiving the relative positioning signal transmitted from the first communication device 10, and can use the calculated position of the second communication device 20 as the absolute position information of the moving body 50. The method for calculating the absolute position information is not limited to the above.

The pseudo signal generating unit 36 generates a pseudo satellite signal including information of the same type of information as that in the satellite signal transmitted from the satellite, based on the time information and the satellite position information acquired by the information acquisition unit 34 and the absolute position information calculated by the absolute position calculation unit 35. In addition, the pseudo signal generating unit 36 generates a pseudo satellite signal from the satellite signal acquired by the information acquisition unit 34. The pseudo satellite signal is information indicating the position of the moving body 50.

The communication control unit 37 controls the information transmission and reception operation in the communication unit 31. The communication control unit 37 can transmit, for example, the pseudo satellite signal generated by the pseudo signal generating unit 36 from the communication unit 31.

The storage unit 33 stores information such as various programs and data related to operation of the positioning system 100. The storage unit 33 includes a storage such as a hard disk drive (HDD) or a solid state drive (SSD).

The position calculation device 40 is mounted in the moving body 50. The position calculation device 40 calculates the position of the moving body 50 based on the pseudo satellite signal generated by the pseudo signal generating device 30 or the satellite signal received by the second communication device 20. The position calculation device 40 includes a communication unit 41, a processing unit 42, and a storage unit 43. The communication unit 41 performs wired or wireless communication with an external device. The communication unit 41 includes an interface such as a network interface card. The communication unit 41 receives the satellite signal from the second communication device 20 and the pseudo satellite signal from the pseudo signal generating device 30.

The processing unit 42 includes a processor such as a CPU and a memory such as a ROM. The processing unit 42 calculates the position of the moving body 50 based on the satellite signal or the pseudo satellite signal received by the communication unit 41. The processing unit 42 can determine that the position of the moving body 50 is outside the building 60, based on the communication result between the first communication device 10 and the second communication device 20. In this case, when the satellite signal is received, the processing unit 42 can calculate the position of the moving body 50 based on the satellite signal. The processing unit 42 can transmit the calculated position of the moving body 50 to the outside (for example, the communication unit 53 of the moving body 50 or the like) from the communication unit 41.

In the pseudo signal generating device 30 and the position calculation device 40 described above, the processors in the processing units 32 and 42 read out various programs and deploy the programs in the memory to execute information processing corresponding to the functions of the respective units. Examples of the various programs include programs received by the communication units 31 and 41, programs stored in the storage units 33 and 43, programs recorded on an external recording medium, and the like. The pseudo signal generating device 30 and the position calculation device 40 function as processing devices (computer) that executes various types of information processing. In addition, other processing devices different from the pseudo signal generating device 30 and the position calculation device 40 may execute the various programs, or the pseudo signal generating device 30, the position calculation device 40, and other processing devices may collaboratively execute various programs.

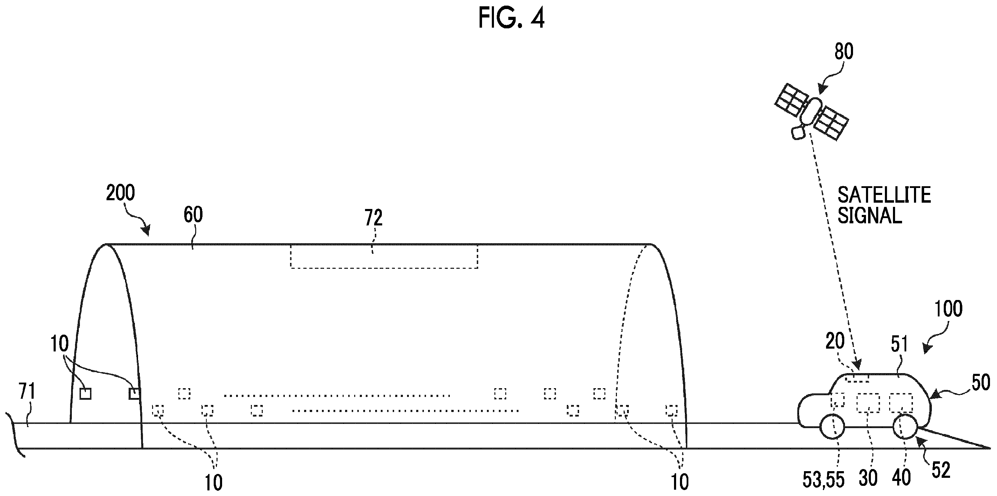

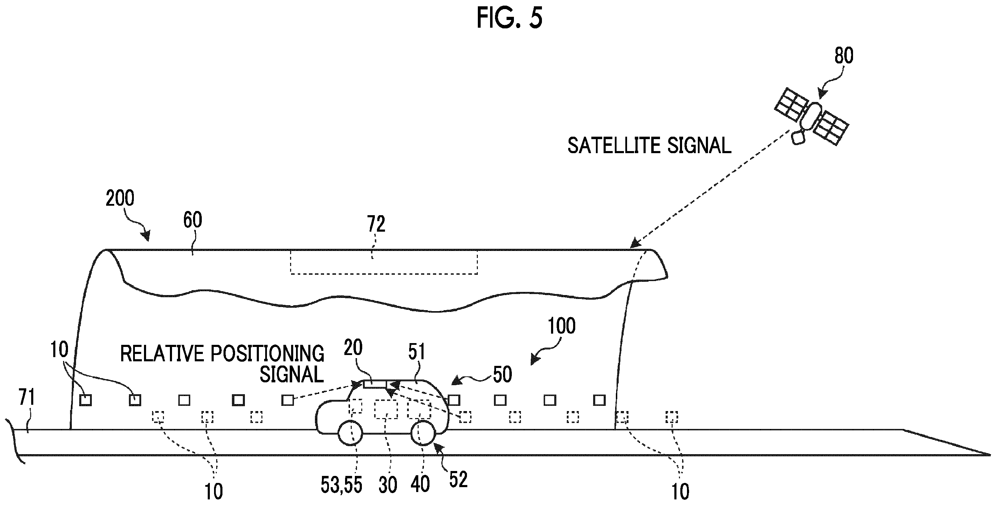

Next, the operation of the positioning system 100 configured as described above will be described. Figs. 4 and 5 are diagrams showing an example of the operation of the positioning system 100. Fig. 5 shows a state in which a part of the building 60 is cut out so that the inside of the building 60 is visible. In the positioning system 100, each first communication device 10 disposed inside the building 60 transmits the relative positioning signal at a predetermined cycle. The second communication device 20 mounted in the moving body 50 is brought into a state where the relative positioning signal transmitted from the first communication device 10 can be received. In addition, the second communication device 20 is brought into a state where the satellite signal transmitted from the satellite 80 can be received. In this state, the moving body 50 travels on the movement path 71 by, for example, autonomous driving.

As shown in Fig. 4, in a case where the moving body 50 travels outside the building 60, the moving body 50 can receive the satellite signal from the satellite 80 by the second communication device 20. The second communication device 20 transmits the received satellite signal to the position calculation device 40 and the pseudo signal generating device 30. In addition, the second communication device 20 transmits the pseudo satellite signal received from the pseudo signal generating device 36 to the position calculation device 40. In this case, the position calculation device 40 may calculate the position information of the moving body 50 based on the satellite signal, or may calculate the position information of the moving body 50 based on the generated pseudo satellite signal. In addition, even in a case where the moving body 50 travels outside the building 60, the position information of the moving body 50 can be calculated based on the pseudo satellite signal. In this case, since it is not necessary to switch the signal input to the position calculation device 40 when the moving body 50 enters the building 60 from the outside of the building 60, it is possible to stabilize the operation. The processing unit 42 can transmit the calculated position of the moving body 50 to the outside (for example, the communication unit 53 of the moving body 50 or the like) from the communication unit 41.

As shown in Fig. 5, in a case where the moving body 50 travels inside the building 60, the second communication device 20 can receive the relative positioning signal transmitted from the first communication device 10. The second communication device 20 transmits the received relative positioning signal to the pseudo signal generating device 30. The information acquisition unit 34 acquires information included in the relative positioning signal from the second communication device 20.

In a case where the information acquisition unit 34 acquires the relative positioning signal transmitted from the first communication device 10, the absolute position calculation unit 35 calculates the position of the second communication device 20 as the absolute position information of the moving body 50, based on the relative positioning signals transmitted from the three first communication devices 10.

In a case where the absolute position information is calculated, the information acquisition unit 34 acquires time information corresponding to a time when the absolute position is calculated. In addition, the information acquisition unit 34 acquires satellite position information indicating the position of the satellite 80 at the time indicated by the acquired time information.

The pseudo signal generating unit 36 generates a pseudo satellite signal based on the time information and the satellite position information acquired by the information acquisition unit 34 and the absolute position information calculated by the absolute position calculation unit 35. The pseudo satellite signal is a signal that includes the same type of information as that in the satellite signal transmitted from the satellite 80. The pseudo satellite signal includes information for specifying the position information of the moving body 50. The pseudo signal generating unit 36 transmits the generated pseudo satellite signal to the second communication device 20. In a case where the relative positioning signal is not acquired, information indicating that the absolute position is unmeasurable is used as the absolute position information, and the pseudo satellite signal can be generated using time information corresponding to a predetermined cycle.

In a case where the second communication device 20 receives the pseudo satellite signal, the second communication device 20 transmits the received pseudo satellite signal to the position calculation device 40. In addition, it is also possible to adopt a configuration in which the pseudo satellite signal is transmitted from the pseudo signal generating unit 36 to the position calculation device 40 without routing through the second communication device 20.

In the position calculation device 40, the communication unit 41 receives the pseudo satellite signal from the second communication device 20. The processing unit 42 calculates the position of the moving body 50 moving inside the building 60 based on the received pseudo satellite signal. The processing unit 42 can transmit the calculated position of the moving body 50 to the outside (for example, the communication unit 53 of the moving body 50 or the like) from the communication unit 41.

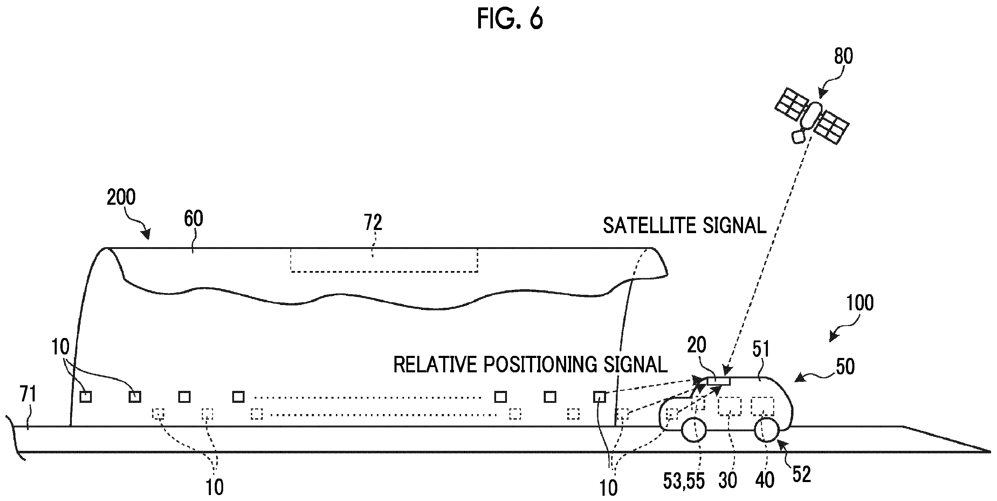

Fig. 6 is a diagram showing another example of the operation of the positioning system 100. In Fig. 6, the building 60 is shown in a state where a part of the building 60 is cut out so that the inside of the building 60 is visible. In the present embodiment, the overlapping communication range SB of the first communication device 10 is configured to protrude to the outside of the building 60 (refer to Fig. 3). For this reason, as shown in Fig. 6, in a case where the moving body 50 enters the building 60 from the outside or in a case where the moving body 50 exits the building 60 from the inside, both the satellite signal from the satellite 80 and the relative positioning signal from the first communication device 10 may be received by the second communication device 20. In this case, in the positioning system 100, the position information of the moving body 50 may be calculated based on the satellite signal, or the pseudo satellite signal may be generated based on the relative positioning signal, and the position information of the moving body 50 may be calculated based on the generated pseudo satellite signal.

In the positioning system 100, it is possible to switch between operation of calculating the position information of the moving body 50 based on the satellite signal and operation of generating a pseudo satellite signal and calculating the position information of the moving body 50 based on the pseudo satellite signal. In this case, for example, the switching between the operations can be performed at a timing when the second communication device 20 receives the relative positioning signal. In addition, in a case where both the satellite signal and the relative positioning signal can be received, the operations may be switched during a period in which both the signals can be received.

Depending on the setting of the communication range of the first communication device 10, it is assumed that a period may occur in which neither the satellite signal nor the relative positioning signal can be received in a case where the moving body 50 enters or exits the building 60. In such a case, for example, by providing the moving body 50 with an acceleration sensor or a gyro sensor, the position of the moving body 50 can be measured by using the acceleration sensor or the gyro sensor through inertial navigation.

As described above, according to a first aspect of the present disclosure, there is provided a positioning system 100 including a first communication device 10 that is disposed inside a building 60; a second communication device 20 that is mounted in a moving body 50 moving inside and outside the building 60 and that is capable of communicating with the first communication device 10; and a pseudo signal generating device 30 that acquires a communication result between the first communication device 10 and the second communication device 20, and generates, based on the acquired communication result, a pseudo satellite signal including the same type of information as that in a satellite signal transmitted from a satellite 80.

According to the configuration, by generating a pseudo satellite signal including the same type of information as that in the satellite signal inside the building 60, it is possible to accurately detect the position of the moving body 50 by using the pseudo satellite signal even in an environment where the satellite signal is attenuated and cannot be received with sufficient intensity, such as inside the building 60.

According to a second aspect of the present disclosure, in the positioning system according to the first aspect, a plurality of the first communication devices 10 are provided, the communication result is a communication result between the second communication device 20 and the first communication device 10, and the pseudo signal generating device 30 is configured to: calculate an absolute position of the moving body 50 based on the communication result;acquire time information corresponding to a time when the absolute position is calculated and satellite position information indicating a position of the satellite 80 at the time indicated by the time information; and generate the pseudo satellite signal based on the absolute position, the time information, and the satellite position information.

According to the configuration, it is possible to accurately obtain the absolute position of the moving body 50, and accurately generate the pseudo satellite signal.

According to a third aspect of the present disclosure, in the positioning system according to the first aspect or the second aspect, the first communication device 10 is set such that an overlapping communication range SB in which a communication range SA of the first communication device 10 overlaps with that of the second communication device 20 protrudes from an inside to an outside of the building 60.

According to the configuration, when the moving body 50 moves from the inside to the outside and from the outside to the inside of the building 60, it is possible to realize a situation where positioning can be performed based on both the satellite signal and the pseudo satellite signal.

According to a fourth aspect of the present disclosure, in the positioning system according to any one of the first aspect to the third aspect, one of the first communication device 10 and the second communication device 20 is a transmission device that transmits a relative positioning signal including device identification information, and the other of the first communication device 10 and the second communication device 20 is a reception device that receives the relative positioning signal.

According to the configuration, since the positioning using the relative positioning signal is performed between the first communication device 10 and the second communication device 20, and the pseudo satellite signal is generated based on the result, it is possible to efficiently generate the pseudo satellite signal.

According to a fifth aspect of the present disclosure, in the positioning system according to any one of the first aspect to the fourth aspect, the building 60 is provided with a movement path 71 along which the moving body 50 moves, and a plurality of the first communication devices 10 are disposed inside the building 60 at predetermined intervals along the movement path 71 of the moving body 50.

According to the configuration, it is possible to accurately generate the pseudo satellite signal as the moving body 50 moves.

According to a sixth aspect of the present disclosure, in the positioning system according to any one of the first aspect to the fifth aspect further includes a position calculation device 40 that is mounted in the moving body 50 and calculates a position of the moving body 50 moving inside the building 60 based on the generated pseudo satellite signal.

According to the configuration, it is possible to highly accurately calculate the position of the moving body 50 by the position calculation device 40 based on the pseudo satellite signal.

According to the configuration, it is possible to detect that the moving body 50 is present outside the building 60 in accordance with the acquisition of the communication result in the pseudo signal generating device 30.

According to a seventh aspect of the present disclosure, in the positioning system according to the sixth aspect, the position calculation device 40 is mounted in the moving body 50.

According to the configuration, since the position calculation device 40 is mounted in the moving body 50, it is possible to efficiently use the position information of the moving body 50 calculated by the position calculation device 40 in the moving body 50.

According to an eighth aspect of the present disclosure, in the positioning system according to any one of the first aspect to the seventh aspect, the second communication device 20 is capable of receiving the satellite signal and the pseudo satellite signal, and transmits the received satellite signal and pseudo satellite signal to the position calculation device 40, the position calculation device 40 calculates the position of the moving body 50 based on the satellite signal and the pseudo satellite signal from the second communication device 20, and the pseudo signal generating device 30 transmits the generated pseudo satellite signal to the second communication device 20.

According to the configuration, in a case where the moving body 50 moves from the inside to the outside and from the outside to the inside of the building 60, it is possible to smoothly measure the position of the moving body 50 based on the satellite signal and the pseudo satellite signal.

According to a ninth aspect of the present disclosure, there is provided a vehicle drive testing device 200 including a movement path 71 along which a test vehicle that is a moving body 50 moves; a condition reproduction mechanism 72 that reproduces a test condition of the test vehicle; a building 60 that covers at least a part of the movement path 71 and the condition reproduction mechanism 72; and the positioning system 100 according to any one of the first aspect to the eighth aspect, in which the positioning system 100 is mounted in the moving body 50 and calculates a position of the moving body 50 moving inside the building 60 based on the generated pseudo satellite signal.

According to the configuration, since it is possible to accurately detect the position of the moving body 50 even inside the building 60 by using the pseudo satellite signal, the test can be performed while the moving body 50 is automatically driven.

According to a tenth aspect of the present disclosure, in the positioning system according to the first aspect, there is provided a moving body 50 having a car body (main body) 51 and a driving device 52 and being movable along a movement path 71 continuous inside and outside a building 60, the moving body 50 including: a second communication device 20 capable of communicating with a first communication device 10 disposed inside the building 60; a pseudo signal generating device 30 that acquires a communication result between the first communication device 10 and the second communication device 20, and generates, based on the acquired communication result, a pseudo satellite signal including the same type of information as that in a satellite signal transmitted from a satellite 80; a position calculation device 40 that calculates a position of the moving body 50 moving along the movement path 71 inside the building 60 based on the generated pseudo satellite signal; and a control device 55 that controls operation of the driving device 52 based on the position calculated by the position calculation device 40.

According to the configuration, since it is possible to accurately measure the position of the moving body 50 even inside the building 60 using the pseudo satellite signal, and control the operation of the driving device 52 using the result of the measurement, the moving body 50 capable of highly accurately performing automatic driving is provided.

The technical scope of the present invention is not limited to the embodiment described above, and can be appropriately changed without departing from the gist of the present invention. For example, in the above-described embodiment, a case where the first communication device 10 is a transmission device of the relative positioning signal and the second communication device 20 is a reception device of the relative positioning signal has been described as an example. However, the present disclosure is not limited to this configuration. The first communication device 10 may be a reception device of the relative positioning signal, and the second communication device 20 may be a transmission device of the relative positioning signal. In this case, it is possible to adopt a configuration in which the pseudo signal generating device 30 is disposed inside the building 60. In this configuration, the relative positioning signal is transmitted from the first communication device 10 to the pseudo signal generating device 30. The pseudo signal generating device 30 generates a pseudo satellite signal and transmits the pseudo satellite signal to the second communication device 20 mounted in the moving body 50. With this configuration, it is possible to reduce the number of devices mounted in the moving body 50.

In addition, in the above-described embodiment, a case has been described in which the building 60 is a structure constituting the drive testing device 200. However, the present disclosure is not limited to this configuration. The building 60 may be, for example, a structure such as a tunnel.

### Reference Signs List

10: first communication device
20: second communication device
30: pseudo signal generating device
31, 41, 53: communication unit
32, 42: processing unit
33, 43: storage unit
34: information acquisition unit
35: absolute position calculation unit
36: pseudo signal generating unit
37: communication control unit
40: position calculation device
50: moving body
51: car body
52: driving device
55: control device
60: building
71: movement path
71a: end portion
72: condition reproduction mechanism
80: satellite
100: positioning system
200: vehicle drive testing device
SA: transmission range (communication range)
SB: overlapping measurement range

## Claims

1. A positioning system comprising:
a first communication device that is disposed inside a building;
a second communication device that is mounted in a moving body moving inside and outside the building and that is capable of communicating with the first communication device; and
a pseudo signal generating device that acquires a communication result between the first communication device and the second communication device, and generates, based on the acquired communication result, a pseudo satellite signal including the same type of information as that in a satellite signal transmitted from a satellite.

2. The positioning system according to Claim 1,
wherein a plurality of the first communication devices are provided,
the communication result is a communication result between the second communication device and the first communication device, and
the pseudo signal generating device is configured to:
calculate an absolute position of the moving body based on the communication result;
acquire time information corresponding to a time when the absolute position is calculated and satellite position information indicating a position of the satellite at the time indicated by the time information; and
generate the pseudo satellite signal based on the absolute position, the time information, and the satellite position information.

3. The positioning system according to Claim 1,
wherein the first communication device is configured such that an overlapping communication range in which a communication range of the first communication device overlaps with that of the second communication device protrudes from an inside to an outside of the building.

4. The positioning system according to Claim 1,
wherein one of the first communication device and the second communication device is a transmission device that transmits a relative positioning signal including device identification information, and the other of the first communication device and the second communication device is a reception device that receives the relative positioning signal.

5. The positioning system according to Claim 1,
wherein the building is provided with a movement path along which the moving body moves, and
a plurality of the first communication devices are disposed inside the building at predetermined intervals along the movement path of the moving body.

6. The positioning system according to Claim 1, further comprising:
a position calculation device that is mounted in the moving body and calculates a position of the moving body moving inside the building based on the generated pseudo satellite signal.

7. The positioning system according to Claim 6,
wherein the position calculation device is mounted in the moving body.

8. The positioning system according to Claim 6,
wherein the second communication device is capable of receiving the satellite signal and the pseudo satellite signal, and transmits the received satellite signal and pseudo satellite signal to the position calculation device,
the position calculation device calculates the position of the moving body based on the satellite signal and the pseudo satellite signal from the second communication device, and
the pseudo signal generating device transmits the generated pseudo satellite signal to the second communication device.

9. A vehicle drive testing device comprising:
a movement path along which a test vehicle that is a moving body moves;
a condition reproduction mechanism that reproduces a test condition of the test vehicle;
a building that covers at least a part of the movement path and the condition reproduction mechanism; and
the positioning system according to Claim 1,
wherein the positioning system is mounted in the moving body and calculates a position of the moving body moving inside the building based on the generated pseudo satellite signal.

10. A moving body having a main body and a driving device and being movable
along a movement path continuous inside and outside a building, the moving
body comprising:
a second communication device capable of communicating with a first communication device disposed inside the building;
a pseudo signal generating device that acquires a communication result between the first communication device and the second communication device, and generates, based on the acquired communication result, a pseudo satellite signal including the same type of information as that in a satellite signal transmitted from a satellite;
a position calculation device that calculates a position of the moving body moving along the movement path inside the building based on the generated pseudo satellite signal; and
a control device that controls operation of the driving device based on the position calculated by the position calculation device.
